# EUROPEAN PATENT APPLICATION

(11) **EP 3 457 665 A1**
(43) Date of publication of application: **20.03.2019**
(21) Application number: 17306206.8
(22) Date of filing: 18.09.2017
(51) Int. Cl.: H04L 29/08, G06F 17/30, H04L 29/06

(54) **METHOD AND DEVICE FOR TRANSFORMING DATA**

(71) Applicant: Thomson Licensing, 92130 Issy-les-Moulineaux (FR)
(72) Inventor: ARAVAMUDAN, Srivathsan, 600096 Chennai (IN); THALAVAY-PILLAI, Ramasamy, 600023 Chennai (IN)
(74) Representative: Vidon Brevets & Stratégie

(57) **Abstract**

A method for transforming content data from a first format to a second format is provided. The method comprises steps of obtaining the first format, the content data and the second format; generating a mapping rule from the first format to the second format by ontology matching technique; and transforming the content data from the first format to the second format by using the mapping rule.

## Description

### TECHNICAL FIELD

The present disclosure relates to data processing, and more particularly relates to a method and a device for transforming data.

### BACKGROUND

The Internet of things (IoT) is the inter-networking of physical devices, vehicles (also referred to as "connected devices" and "smart devices"), buildings and other items embedded with electronics, software, sensors, actuators, and network connectivity which enable these objects to collect and exchange data. The loT allows objects to be sensed or controlled remotely across existing network infrastructure, creating opportunities for more direct integration of the physical world into computer-based systems, and resulting in improved efficiency, accuracy and economic benefit.

Typically, IoT is expected to offer advanced connectivity of devices, systems and services that goes beyond machine-to-machine (M2M) communications and covers a variety of protocols, domains, and applications. "Things", in the loT sense, can refer to a wide variety of devices such as heart monitoring implants, biochip transponders on farm animals, electric clams in coastal waters, automobiles with built-in sensors etc. These devices collect useful data with the help of various existing technologies and then autonomously flow the data between other devices. Current market examples include home automation (also known as smart home devices) such as the control and automation of lighting, heating (like smart thermostat), ventilation, air conditioning (HVAC) systems, and appliances such as washer/dryers, robotic vacuums, air purifiers, ovens, or refrigerators/freezers that use Wi-Fi or other wireless communication protocol for remote monitoring.

But there is not a standard allowing devices from different device manufactures to communicate with each other. Device manufactures have to convert or transform source data, acquired from a source device made by a different device manufacture, from a source format to a target format fitted for its own processing.

### SUMMARY

According to an aspect of the present disclosure, it is provided a method for transforming content data from a first format to a second format. The method comprises steps of obtaining the first format, the content data and the second format; generating a mapping rule from the first format to the second format by ontology matching technique; and transforming the content data from the first format to the second format by using the mapping rule.

According to another aspect of the present disclosure, it is provided a device for transforming content data from a first format to a second format, comprising a processor for obtaining the first format, the content data and the second format; generating a mapping rule from the first format to the second format by ontology matching technique; and transforming the content data from the first format to the second format by using the mapping rule.

According to another aspect of the present disclosure, it is provided a computer program comprising program code instructions executable by a processor for implementing the method described above.

According to another aspect of the present disclosure, it is provided a computer program product which is stored on a non-transitory computer readable medium and comprises program code instructions executable by a processor for implementing the method described above.

It is to be understood that more aspects and advantages of the invention will be found in the following detailed description of the present invention.

### BRIEF DESCRIPTION OF THE DRAWINGS

The accompanying drawings, which are included to provide a further understanding of the invention and are incorporated in and constitute a part of this application, will be used to illustrate an embodiment of the invention, as explained by the description. The invention is not limited to the embodiment.

In the drawings:
Fig. 1 is a diagram showing a system for data transformation according to an embodiment of present disclosure;
Fig. 2 is a block diagram of an exemplary device implementing functions of DTS engine 104 according to the embodiment of the present disclosure;
Fig. 3 is a flow chart showing a method for data transformation using ontology matching technique according to an embodiment of the present disclosure; and
Fig. 4 is a flow chart showing a method for generating a mapping rule by using ontology matching technique according to the embodiment of the present disclosure.

### DETAILED DESCRIPTION

The embodiment of the present invention will now be described in detail in conjunction with the drawings. In the following description, some detailed descriptions of known functions and configurations may be omitted for clarity and conciseness.

The present disclosure provides a method and a device for transforming data presentation of source data from a first format, e.g. source format to a second format, e.g. a target format. And a transforming rule (or called mapping rule) from the first format to the second format is generated. The present disclosure aims to facilitate the deployment of applications from different application makers over heterogeneous devices from different device manufactures. With the help of the present disclosure, application programmers are able to focus more on the functions of the applications without needing to implement the conversion of data formats. In other words, for the application developers the data will just be available.

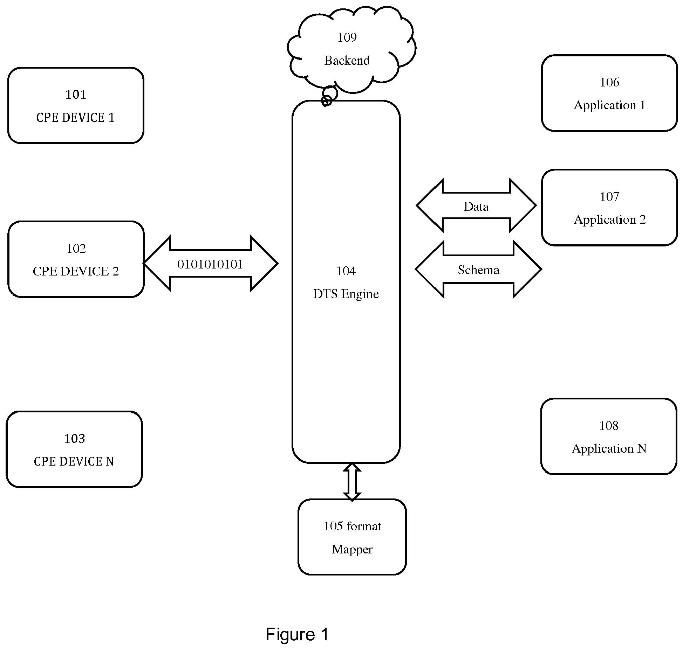

The present disclosure is described in the context of home below. Fig. 1 is a diagram showing a system for data transformation according to an embodiment of present disclosure. The system comprises at least one CPE (customer premises equipment) devices 101, 102 and 103, a DTS (data transformation service) engine 104, a format mapper 105, at least one application 106, 107 and 108 and a backend 109. A detailed description on these components are provided below.

The CPE devices 101, 102 and 103: In this embodiment, 3 CPE devices are shown. A CPE device is any terminal and associated equipment located at a subscriber's premises. It generally refers to devices such as telephones, routers, network switches, residential gateways, set-top boxes, home appliances (e.g. lamp, refrigerator, micro wave oven etc.). Other devices can also be used as long as the other devices are capable of providing structured data via some physical communication link. The other devices comprise, for example, a sensor device with a transceiver, a proxy device with a transceiver and a data aggregator with a transceiver. Regarding the structured data, the structured data is provided in the form of a computer readable file. It can be a plain text or encoded text. In the file, the data can be organized in one level of nesting, such as INI file, which has at least one name-value pairs (also called attribute-value pair, field-value pair, key-value pair). And in some case, the name-value pairs are partitioned into several sections. The data can also be organized in two or more level of nesting, which means a name-value pair has a value that contains nested collection of name-value pairs. JSON (JavaScript Object Notation) and XML (Extensible Markup Language) allows deep nesting. Regarding the physical communication link, the other devices shall have at least one physical communication transceiver. The transceiver comprises Bluetooth transceiver, Ethernet network card, 802.11 adaptor, ZigBee transceiver, NFC (near field communication) adaptor etc.

The DTS engine 104: The DTS engine 104, which can be implemented with a dedicated hardware module with a processor, input hardware module and output hardware module, with a combination of a general purpose CPU and program codes, or with CPE devices (e.g. the CPE devices contain the DTS engine), is used to transform a source data in a first format received from any of the CPE devices to an output data in a second format, which is required by one of the applications. During the transformation, the DTS engine 104 searches for a transformation rule in the format mapper 105 between the first format and the second format by using identifiers of the first format and the second format. Herein, if the identifier for any of the first format and the second format is not ascertained, the DTS engine 104 compares the unidentified format with the formats in the database to determine the identifier. If the transformation rule is found, the DTS engine 104 uses the transformation rule for the transformation. If such rule is not found, the DTS engine 104 generates a transformation rule by using the first format and the second format and stores the generated transformation rule into the format mapper 105. In addition, the DTS engine 104 may provide some application interfaces (APIs) for the applications 106, 107 and 108 to invoke. In another example, the invocations of the functions can be implemented in a client/server manner. The DTS engine 104 is implemented as a server while an application is implemented in a remote device as a client. In another example, the APIs can be implemented as a web service.

The format mapper 105: The format mapper 105, which is implemented in a storage, is used to store transformation rules. For example, for JSON and XML the format mapper 105 stores a transformation rule for the mapping between the schemas. Regarding the schema (or called schema document or schema file), this is an abstract collection of metadata, consisting of a set of schema components specifies a format to define or organize the structure of content data file. In our example, the content data are values that the CPE devices provides or detects regarding their status, e.g. current temperature in the refrigerating chamber and freezing chamber in the refrigerator, current temperature where the air conditioner locates etc.

The applications 106, 107 and 108: In this embodiment, 3 applications are shown. An application programmer can write an application to send a desired format to the DTS engine (e.g. a schema when JSON or XML is used) and instruct the DTS engine to send the data in a desired format to itself.

The backend 109: The backend 109, which can be implemented with a storage, either in the same device as the DTS engine 104 or in a separate device than the DTS engine 104, is used as data repository to store data from the CPE devices 101, 102 and 103.

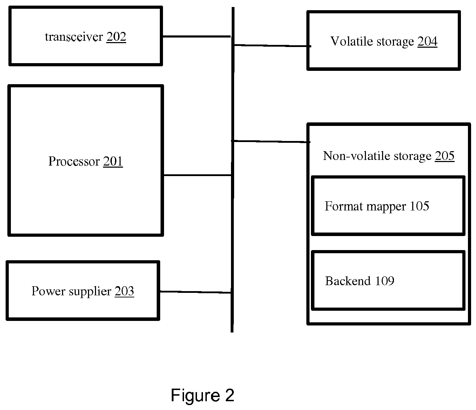

Fig. 2 is a block diagram of an exemplary device implementing functions of DTS engine 104 according to the embodiment of the present disclosure. And in this example, the format mapper 105 and the backend 109 are implemented in a local storage. It includes at least one microprocessor (MPC) or processor 201, at least one transceiver 202, a power supply 203, a volatile storage 204 and a non-volatile storage 205.

The MPC 201 is used to process program instructions stored on the non-volatile storage 206, e.g. software codes for data transformation etc.

The transceiver 202 is used to receive and send data. Its type comprises Ethernet transceiver, DSL transceiver, Wi-Fi transceiver, ONU (optical network unit) or ONT (optical network terminal), USB port etc. In an example, the at least one transceiver 202 includes a Wi-Fi transceiver for communicating with the CPE devices and devices having the applications through a Wi-Fi gateway. In another example, the device having the DTS engine is a gateway, and the at least one transceiver 202 includes a Wi-Fi transceiver for communicating the devices having the applications and a USB port or an Ethernet port for communicating with the CPE devices.

The power supply 203 is used to supply power to all modules of the device. In an example, it converts alternating current to a 5 V direct current.

The volatile storage 204 is used to store temporary data. In implementations, it uses volatile random access memory (RAM), e.g. SDRAM.

The non-volatile storage 205 is used to store data and program instructions, which remain in the non-volatile storage 205 even when it is not powered. In implementations, it can use read only memory (ROM), flash etc. As to flash, it can use NOR flash and NAND flash. In this embodiment, both the format mapper 105 and the backend 109 are implemented in the non-volatile storage 205. In another embodiment, the backend 109 is implemented in the volatile storage 204.

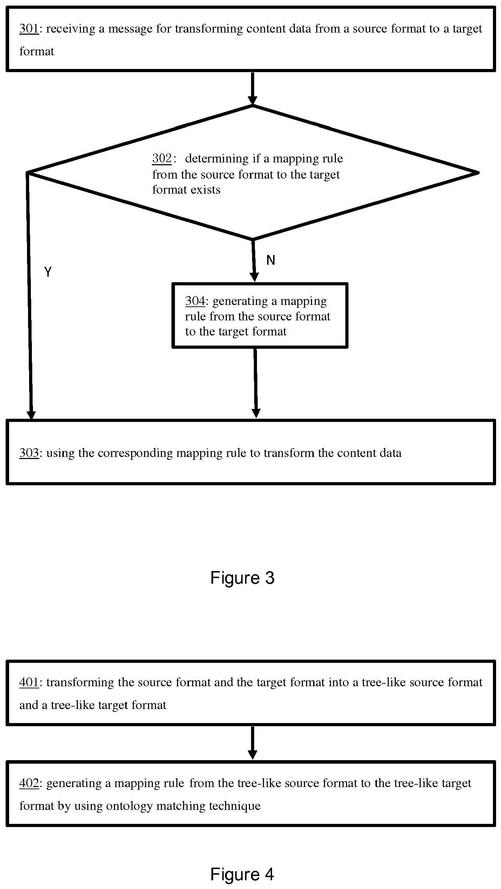

Fig. 3 is a flow chart showing a method for data transformation using ontology matching technique according to an embodiment of the present disclosure. The method is described in conjunction with JSON, which is a nested structured data, where a schema file is used to describe the structure of content data file.

At step 301, the device receives, via the transceiver 202 from an application in another device, a message for transforming content data from a source format to a target format. The message comprises information relating to a target format and information relating to source content data and source format.

The information relating to a target format can be any one of the following: a target JSON schema file, an indicator indicating a storage location of the target JSON schema file or a unique identifier indicative of the target JSON schema file, by using which the device is able to obtain the target JSON schema file. Herein, the target JSON schema file is received and stored in the backend 109.

The information relating to the source content data and the source format are a source JSON file and a source JSON schema file when being implemented in the framework of JSON. It shall note that the information can also be the location indicators for the two files or the unique identifiers of the two files. In a variant of the embodiment, when being implemented in the framework of one-level nesting file, e.g. INI file in Windows OS, the information relating to the source content data and the source format is a single file, e.g. an INI file. It can also be a location indicator or a unique identifier. Herein, the source content data and the source format are received from the CPE device and stored in the backend 109.

Below show examples of a source format, i.e. a source schema from a heart-rate sensing device and a target format, i.e. a target schema that is suitable to be used by an application. As can be seen from the examples, the content data provided by the heart-rate sensing device and the content data required by the application are organized quite heterogeneous.

```
     The Source Schema:
     "deviceData":{
         "propertyKey":"heart-rate",
         "value":"46",
         "timeStamp":"2015-08-19T19:43:37+0100"
     }
     The Target Schema:
     "data":{
        "HeartRate"="46",
        "TimeStamp"="2015-08-19T19:43:37+0100"
     }
```

At step 302, the device determines if a corresponding mapping rule from the source format to the target format exists in the format mapper 105. In an example, each schema is assigned with a unique identifier. There is a mapping table in the format mapper 105. The mapping table comprises 3 data fields of an input format identifier, an output format identifier and a mapping rule from the input format to the output format. For the format file whose format identifier the device does not know, the device compares the unknown format file with the format files stored in the backend 109 to determine the format identifier. By using the source format identifier and the target format identifier, the device determines if there is an entry in the table. If an entry exists, it goes to step 303.

At step 303, the device uses the corresponding mapping rule to transform the content data.

At step 304, if no entry exists, the device generates a mapping rule from the source format to the target format by using ontology matching technique on the source format and the target format, stores the mapping rule in the mapping table or in other place of the non-volatile storage 205 and adds an entry in the mapping table in the format mapper 105. Herein, ontology matching (or called ontology alignment) technique is the process of determining correspondences between names in ontologies of heterogeneous formats. This technique involves an improved semantic matcher that maps the target format to the source format in order to produce a mapping rule. Fig. 4 is a flow chart showing a method for generating a mapping rule by using ontology matching technique according to the embodiment of the present disclosure.

At step 401, the device transforms the source format and the target format into a source tree format and a target tree format. Here, regarding the definition of the tree format or tree structure or tree diagram, it is a way of organizing the hierarchical nature of a data structure in a graphical form. In the tree format, it has a parent node and nested child nodes. Here the nested child node means that it is a child node to a higher level child node or the parent node and it also has at least one lower level child node. Below describes pseudo code for converting or transforming the JSON schema to the tree format.

```
     JSONtoTree()
     For all names in the JSON
           Add a node for the name as child node to the upper level
     node;
           If value is a JSONObject
                  Call function JSONtoTree() for the value;
           If value is a JSONArray and has at least one element of
     JSONObject
                  Call Function JSONtoTree() for each JSONObject
     element in the JSONArray;
     End of For loop
```

Herein, JSONObject is a modifiable set of name-value mappings (name-value pairs). Names are unique, non-null strings. Values may be any mix of JSONObjects, JSONArrays, Strings, Booleans, Integers, Longs, Doubles or NULL. JSONArray is a dense indexed sequence of values. Values may be any mix of JSONObjects, other JSONArrays, Strings, Booleans, Integers, Longs, Doubles, null or NULL. Values may not be NaNs, infinities, or of any type not listed here. So in JSON, JSONObject can be considered as a single element and JSONArray can be considered as a sequence of elements.

In this embodiment, the "DeviceData" in the source schema and the "Data" in the target schema are created as root node in the tree format. Each name in a name-value pair in the source format or the target format is generated as a node in the tree format. For JSONObject and elements of JSONArray whose values may be a name-value pair (i.e. nested structure), a child node shall be created for the name in the value of JSONObject or an element of JSONArray. So JSONToTree() function is iterative.

By using the method described above, the generated tree formats are shown below:

```
     Source Tree Schema:
     DeviceData
           propertyKey
           Value
           Timestamp
     Target Tree Schema:
     Data
           HeartRate
           Timestamp
```

In this embodiment, the source format is JSON schema. But if the source format is XML schema, there are standard tools available for converting the XML schema to JSON schema.

At step 402, the device generates a mapping rule from the source tree format to the target tree format by using ontology matching technique, stores the mapping rule in the mapping table or in other place of the non-volatile storage 205 and adds an entry in the mapping table. In an example, S-Match or S-Match like algorithm is used as ontology matching technique. S-Match is an example of a semantic matching framework, and it works on lightweight ontologies, namely graph structures (including tree structure) where each node is labeled by a natural language word. The output of S-Match is a set of semantic correspondences called mapping attached with one of the following semantic relations: disjointness (⊥), equivalence (≡), more specific (⊏) and less specific (⊐). More information on S-Match can be found in the following web page: https://sourceforge.net/projects/s-match/. Herein, we modify codes for output rendering in the S-Match algorithm as below:

```
     For all results in S-Match
           Join source node as root.child.grandchild-> ..... and concat
           to result
           If the matcher output is = Concat Equals
           If the matcher output is disjoint Skip result
           Else say general form
     End For
```

Herein, S-Match produces relations between context(s). The output if the s-match is converted into the mapping rule. First the LHS (left hand side of the operator to be used in the S-Match) and the RHS (right hand side of the operator to be used in the S-Match) are constructed by appending all the nodes of the tree from the parent node or root node to the leaf.

There are 3 LHS nodes for this tree.
1. DeviceData.PropertyKey.heart-rate
2. DeviceData.Value
3. DeviceData.Timestamp

Similarly, the RHS nodes for the tree are
1. Data.HeartRate
2. Data.TimeStamp

For each of the LHS the mapping output is queried. Based on the result of the query (semantic relations) the mapping rule is rendered. The disjoint relations are ignored, and rest of the semantic relations are captured.

The rendering output of S-Match is shown below:

```
           DeviceData.PropertyKey.HeartRate Equals Data.HeartRate
           DeviceData.Value More General Form of Data.HeartRate
           DevicData.TimeStamp Equals Data.time.
```

The result of the S-Match output at this stage has 3 possibilities.
1. Complete mapping: It means that the mapping rule contains unique mapping for every node in the target format.
2. Partial mapping: It means that the mapping rule contains anomalies.
3. No Mapping: It means that the mapping rule contains no mapping.

For partial mapping and no mapping, the device provides a graphic user interface, e.g. a window form, allowing the user to manually match the nodes in the source tree format and the target tree format. In a variant of the embodiment, for the complete mapping, the device also provides a graphic user interface for the user to confirm the matching or alignment.

The following pseudo code is used to generate the mapping rule from the rendering output of the S-Match. It shall note that these pseudo code can be incorporated into the pseudo code for output rendering of the S-Match to directly generate the mapping rule.

```
           For all lines in the result
                  Get the Source Node, Destination Node and The Result
                  If the Result is "equal" then the use "="
                  Else cease until the user manually makes all Result
           "equal"
```

The generated mapping rule is shown below:

```
           "rule":{
              data.HeartRate=deviceData.value
                data.TimeStamp=deviceData. Timestamp
              }
```

In the embodiment described above, if the value in the name-value pair is a string (a linear sequence of symbols, e.g. characters or words or phrases), it is not created as a node in the tree format. In a variant of the embodiment, the device checks if the string-type value has any meaningful data. And if the value in the name-value pair has some meaning data, the device concatenates the meaningful data with the name, and uses the concatenated string as the node name to create a node in the tree format. By doing this, we can increase the possibility of being matched in the S-Match process. The following shows a determination function for determining if a string-type value has meaningful data.

```
           IsValueMeaningFull()
                  If value is proper string
                        Split string to substrings (use common
                  splitting methods like comma, semicolon etc.);
                  For all substrings
                        If the word is in WordNet
                  (https://wordnet.princeton.edu/)
                              Concatenate the string to output;
                    End for loop
                  Return the meaningful string.
```

As can be seen from the above pseudo code, the device splits the string-type value into one or more substrings based on comma, semicolon, blank space etc. For each substring, the device determines if it has some meaning. And if the substring has some meaning, the device concatenates the substring to the name of the name-value pair. Below shows an example for checking if the word is in WordNet (i.e. if it has some meaning). Herein, linguisticOracle is an instance of ILinguisticOracle, which has been implemented by WordNet in the Class WordNet. It can be found in it.unitn.disi.smatch.oracles.wordnet.WordNet under java.lang.Object.

```
                  if (linguisticOracle.getSenses(word)> 0)
                        Word is meaningful
                  else
                        Not Meaningful;
```

With the use of the above method, the generated tree formats are:

```
     Source Tree Schema (improved):
     DeviceData
           propertyKeyHeartRate
           Value
           Timestamp
     Target Tree Schema(improved):
     Data
           HeartRate
           Timestamp
```

According to a variant of the embodiment, the device does not perform step 302. The device always generates a new mapping rule when obtaining the first format and the second format. And consequently, the device does not store the mapping table and the generated mapping rule permanently.

As will be appreciated by one skilled in the art, aspects of the present principles can be embodied as a system, method or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer diskette; a hard disk; a read-only memory (ROM); an erasable programmable read-only memory (EPROM or Flash memory); a portable compact disc read-only memory (CD-ROM); an optical storage device; a magnetic storage device; or any suitable combination of the foregoing.

Thus, for example, it will be appreciated by those skilled in the art that the block diagrams presented herein represent conceptual views of illustrative system components and/or circuitry embodying the principles of the invention. Similarly, it will be appreciated that any flow charts, flow diagrams, state transition diagrams, pseudo code, and the like represent various processes which may be substantially represented in computer readable storage media and so executed by a computer or processor, whether or not such computer or processor is explicitly shown.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application and are within the scope of the invention as defined by the appended claims.

## Claims

1. A method for transforming content data from a first format to a second format, comprising:
obtaining the first format, the content data and the second format (301);
generating a mapping rule from the first format to the second format by ontology matching technique (304); and
transforming the content data from the first format to the second format by using the mapping rule (303).

2. The method of claim 1, further comprising
storing the mapping rule and the relationship between the first format, the second format and the mapping rule.

3. The method of claim 1, further comprising
providing a graphic user interface for a user to manually match elements in the second format that are not successfully matched by the ontology matching technique.

4. The method of claim 1, the generating further comprising
transforming the first format and the second format into a first tree format and a second tree format (401), wherein each name in name-value pairs in the first format and the second format is assigned to a node as node name in the first tree format and the second tree format; and
generating the mapping rule from the first tree format to the second tree format by using ontology matching technique (402).

5. The method of claim 4, further comprising
when determining a value in a name-value pair has meaningful data, concatenating the name and the meaningful data as the node name.

6. The method of claim 1, wherein the ontology matching technique comprises semantic matching.

7. A device for transforming content data from a first format to a second format, comprising:
a processor (201) for obtaining the first format, the content data and the second format; generating a mapping rule from the first format to the second format by ontology matching technique; and transforming the content data from the first format to the second format by using the mapping rule.

8. The device of claim 7, further comprising
a storage (205) for storing data;
wherein the processor (201) is further used for storing the mapping rule and the relationship between the first format, the second format and the mapping rule into the storage (205).

9. The device of claim 7, wherein
the processor (201) is further used for outputting a graphic user interface for a user to manually match elements in the second format that are not successfully matched by the ontology matching technique.

10. The device of claim 7, wherein
the processor (201) is further used for transforming the first format and the second format into a first tree format and a second tree format, wherein each name in name-value pairs in the first format and the second format is assigned to a node as node name in the first tree format and the second tree format; and for generating the mapping rule from the first tree format to the second tree format by using ontology matching technique.

11. The device of claim 10, wherein
the processor (201) is further used for when determining a value in a name-value pair has meaningful data, concatenating the name and the meaningful data as the node name.

12. The device of claim 7, wherein the ontology matching technique comprises semantic matching.

13. Computer program comprising program code instructions executable by a processor for implementing a method according to at least one of claims 1 to 6.

14. Computer program product which is stored on a non-transitory computer readable medium and comprises program code instructions executable by a processor for implementing a method according to at least one of claims 1 to 6.
